# EUROPEAN PATENT SPECIFICATION

(11) **EP 3 716 240 B1**
(45) Date of publication and mention of the grant of the patent: **27.09.2023**
(21) Application number: 20162017.6
(22) Date of filing: 10.03.2020
(51) Int. Cl.: G08B 17/00, G08B 25/10, H01Q 1/22, H01Q 5/35, H04B 1/00, H04B 1/04, H04B 1/18, H01Q 9/42

(54) **WIRELESS COMMUNICATION TERMINAL, FIRE ALARM, AND MANAGEMENT SYSTEM**
DRAHTLOSKOMMUNIKATIONSENDGERÄT, BRANDMELDER UND VERWALTUNGSSYSTEM
TERMINAL DE COMMUNICATION SANS FIL, ALARME INCENDIE ET SYSTÈME DE GESTION

(30) Priority: 27.03.2019 JP 2019061914
(43) Date of publication of application: 30.09.2020
(73) Proprietor: Panasonic Intellectual Property Management Co., Ltd., Osaka-shi, Osaka 540-6207 (JP)
(72) Inventor: NAGATA, Masahiro, Osaka, 540-6207 (JP); SUZUKI, Yuta, Osaka, 540-6207 (JP); KIKUCHI, Hironori, Osaka, 540-6207 (JP); KOMUKAI, Yasunori, Osaka, 540-6207 (JP)
(74) Representative: Appelt, Christian W.

(56) References cited:
- EP-A1- 3 113 373
- JP-A- 2005 260 762
- US-A1- 2007 035 458
- US-A1- 2016 286 169

## Description

### Technical Field

The present disclosure generally relates to wireless communication terminals, fire alarms, and management systems. The present disclosure specifically relates to a wireless communication terminal configured to perform wireless communication, a fire alarm including the wireless communication terminal, and a management system including the fire alarm.

### Background Art

JP 2015-87883 A discloses an alarm (home alarm: fire alarm for dwelling house). The home alarm is a wireless-cooperation type home alarm system having a function of wirelessly transmitting and receiving a cooperation signal for such as a fire to and from another home alarm. A home alarm as a cooperation source outputs an alarm sound such as "Woo Woo, a fire alarm has been activated. Please confirm" which indicates the cooperation source as an alarm operation. On the other hand, a home alarm as a cooperation destination outputs an alarm sound such as "Woo Woo, another fire alarm has been activated. Please confirm" which indicates the cooperation destination.

EP 3 113 373 A1 discloses a radio frequency front-end system, including a first antenna, a second antenna, a first radio frequency circuit, a second radio frequency circuit, and a control apparatus, where the control apparatus is configured to acquire a transmission frequency band selected by the first radio frequency circuit, and if a frequency in the transmission frequency band selected by the first radio frequency circuit is less than a preset frequency, control the first radio frequency circuit to connect to the second antenna, and disconnect a connection between the second radio frequency circuit and the second antenna, or maintain an open circuit state between the second radio frequency circuit and the second antenna.

US 2007/035458 A1 discloses an antenna device and a radio apparatus. The antenna device is configured to be coupled to a feeding point of the radio apparatus. The antenna device has a first antenna element and a second antenna element. The first antenna element is configured to be an unbalanced-fed antenna fed at the feeding point to resonate at a first frequency. The second antenna element is configured to be a monopole antenna having an open end and to be fed at the feeding point. The first antenna element and the second antenna element have a common portion from the feeding point to a branching point. The second antenna element is configured to be ungrounded in a first state to resonate at a second frequency lower than the first frequency and to be grounded in a second state at a switch point between the branching point and the open end.

US 2016/286169 A1 discloses a camera assembly including a lens module located within the housing and configured to receive light via the front surface, and a circuit board comprising communication circuitry located within the housing and configured to wireless communicate over a plurality of different communication protocols. The camera assembly further includes a first antenna arranged at a location on the circuit board, the first antenna configured for communication over a first one of the communication protocols, and a second antenna arranged at a location on the inner surface of the periphery, the second antenna configured for communication over a second one of the communication protocols.

JP 2005-260762 A discloses an antenna switching system and method for a communication device powered from radio lines via matching circuits.

### Summary of Invention

The invention is defined by the appended claims. The home alarm may be desirably able to perform wireless communication with apparatuses other than another home alarm. In this case, for example, antenna elements compatible with respective two different frequencies may be required. However, for some frequencies, an electrical length of ground of a circuit board in the home alarm may be insufficient, and thus, a satisfactory antenna gain may not be obtained.

In view of the foregoing, it is an object of the present disclosure to provide a wireless communication terminal, a fire alarm, and a management system which can improve an antenna gain.

A wireless communication terminal comprised by the claimed fire alarm is configured to perform wireless communication at a first frequency and a second frequency which are different from each other. The wireless communication terminal includes a first antenna element, a second antenna element, and a wireless circuit. The wireless circuit is configured to perform at least one of transmission or reception of a radio signal via the first antenna element and the second antenna element. The wireless communication terminal is configured such that when the wireless communication terminal performs the wireless communication at the first frequency, the first antenna element is in an electric power receiving state and the second antenna element is in a grounded state. The wireless communication terminal is configured such that when the wireless communication terminal performs the wireless communication at the second frequency, the second antenna element is in an electric power receiving state and the first antenna element is in an opened or grounded state.

A fire alarm according to one aspect of the present disclosure includes the wireless communication terminal, a sensor configured to sense a fire, and an acoustic section configured to produce an alarm sound in accordance with sensing of the fire. The fire alarm is configured to, when the sensor senses the fire, transmit a cooperation signal to another fire alarm at the first frequency, the cooperation signal being a signal for causing the another fire alarm to produce the alarm sound in a cooperative manner. Moreover, the fire alarm is configured to, when the sensor senses the fire, transmit a notification signal to a communication device at the second frequency, the notification signal being a signal for externally giving a notification of the fire.

A management system according to one aspect of the present disclosure includes the fire alarm, one or a plurality of the another fire alarms, and a control apparatus serving as the communication device and being configured to manage one or a plurality of electric loads.

### Brief Description of Drawings

FIG. 1 is a plan view schematically illustrating a housing interior of a fire alarm including a wireless communication terminal according to one embodiment;
FIG. 2 is a block diagram schematically illustrating a configuration of a management system according to the one embodiment,
FIG. 3 is a view illustrating an application example of the management system;
FIG. 4 is a view illustrating an external server and an information terminal in the management system;
FIG. 5 is a circuit diagram schematically illustrating the wireless communication terminal;
FIG. 6 is a circuit diagram schematically illustrating the wireless communication terminal;
FIG. 7 is a circuit diagram schematically illustrating a first variation of the wireless communication terminal; and
FIG. 8 is a circuit diagram schematically illustrating a second variation of the wireless communication terminal;

### Description of Embodiments

### (1) Schema

Figures described in the following embodiment are schematic views. The ratio of sizes and the ratio of thicknesses of components in each figure do not necessarily reflect actual dimensional ratios.

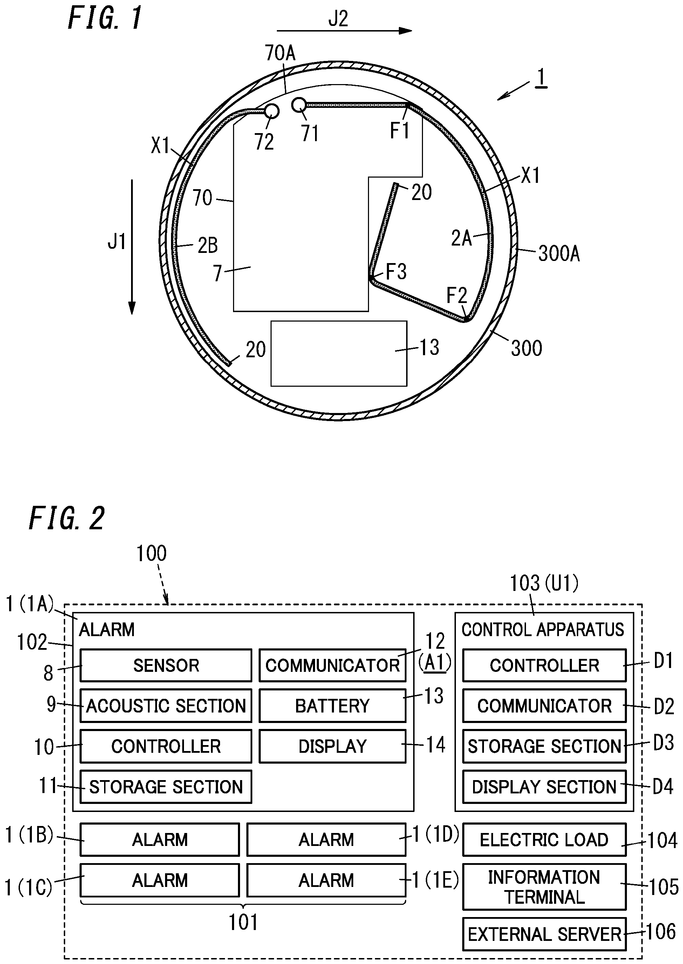

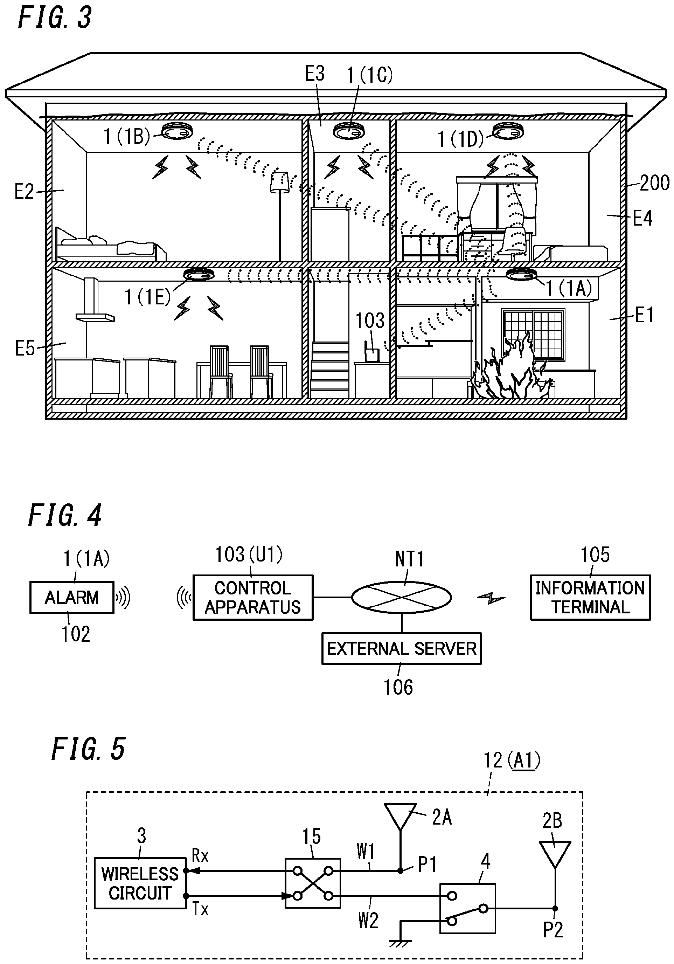

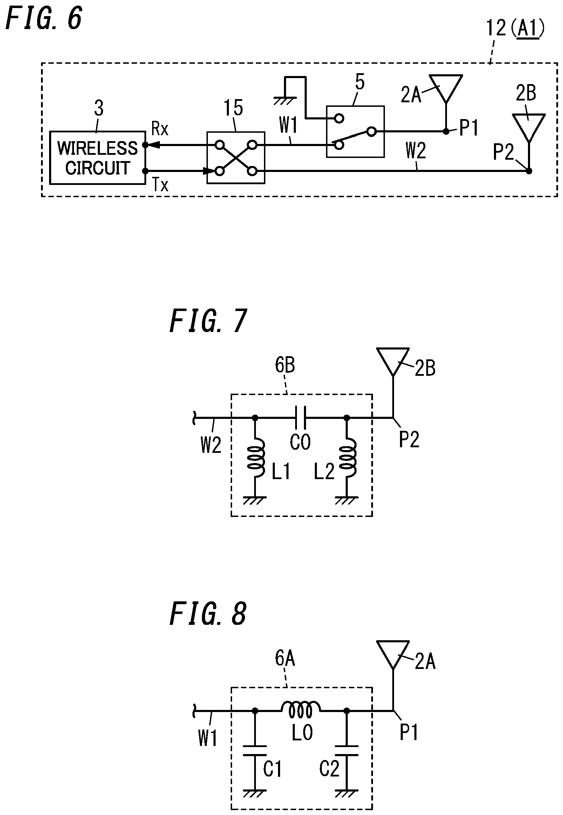

A wireless communication terminal A1 (see FIG. 2) comprised by the fire alarm according to the present embodiment is configured to perform wireless communication at a first frequency and a second frequency which are different from each other. As illustrated in FIGS. 5 and 6, the wireless communication terminal A1 includes a first antenna element 2A, a second antenna element 2B, and a wireless circuit 3. Here, for example, it is assumed that each of the first antenna element 2A and the second antenna element 2B is a linear antenna, and the type of the antenna is a monopole antenna. The wireless circuit 3 is configured to perform at least one of transmission or reception of a radio signal via the first antenna element 2A and the second antenna element 2B.

The wireless communication terminal A1 is configured such that when the wireless communication terminal A1 performs the wireless communication at the first frequency, the first antenna element 2A is in an electric power receiving state, and the second antenna element 2B is in a grounded state. In other words, the first antenna element 2A is an antenna element for performing communication by a radio wave at a first frequency (band), and the second antenna element 2B functions as a ground wire.

The wireless communication terminal A1 is configured such that when the wireless communication terminal A1 performs the wireless communication at the second frequency, the second antenna element 2B is in an electric power receiving state, and the first antenna element 2A is in an opened or grounded state. In other words, the second antenna element 2B is an antenna element for performing communication by a radio wave at a second frequency (band), and the first antenna element 2A functions as a ground wire (when the first antenna element 2A is grounded). In the case of the communication at the second frequency, the first antenna element 2A does not necessarily have to be grounded but may be in the opened state.

In sum, the second antenna element 2B is a shared element whose function is switched to a function as the antenna element or a function as the ground wire depending on at which one of the first frequency and the second frequency the wireless communication is performed.

It is assumed that the wireless communication terminal A1 according to the present embodiment is applied to, for example, a fire alarm 1 (hereinafter simply referred to also as an "alarm 1"). In other words, the fire alarm 1 includes the wireless communication terminal A1, a sensor 8 configured to sense a fire, and an acoustic section 9 configured to produce an alarm sound in accordance with sensing of the fire. The alarm 1 is configured to, when the sensor 8 senses the fire, transmit a cooperation signal to another alarm 1 at the first frequency. The cooperation signal is a signal for causing the another alarm 1 to produce the alarm sound in a cooperative manner. The alarm 1 is configured to, when the sensor 8 senses the fire, further transmit a notification signal to a communication device U1 at the second frequency. The notification signal is a signal for giving a notification of the fire externally (to an outside of a facility 200 in the embodiment).

A management system 100 according to the present embodiment includes the alarm 1, one or a plurality of the another fire alarms 1, and a control apparatus 103 serving as the communication device U1 and being configured to manage one or a plurality of electric loads 104 (only one of which is shown in FIG. 1). That is, the management system 100 includes a plurality of cooperation-type alarms 1.

As described above, here, for example, it is assumed that the wireless communication terminal A1 is applied to the fire alarm 1 having a sensing function of sensing the occurrence of a fire and an alarm function of informing when the fire alarm 1 senses the occurrence of the fire. That is, a sensing target is a fire.

The management system 100 is applied to, for example, the facility 200 (see FIG. 3). Specifically, a plurality of alarms 1 are installed on ceilings, walls, or the like in spaces as installation targets in the facility 200. In the present embodiment, each of the plurality of alarms 1 is installed in a corresponding one of spaces E1 to E5 in the facility 200 as illustrated in FIG. 3. The control apparatus 103 of the management system 100 is, for example, a controller of a home energy management system (HEMS) installed in the facility 200.

Here, for example, the alarm 1 is assumed to be a "residential" fire alarm but is not limited to "residential". Moreover, in the embodiment, the facility 200 is assumed to be a detached dwelling house. However, the facility 200 may be a multiple residential dwelling complex (condominium). In addition, the facility 200 is not limited to a dwelling house but may be a non-dwelling house, for example, an office building, a theater, a movie theater, a public assembly hall, a recreation hall, a complex facility, a restaurant, a department store, a school, a hotel, an inn, a hospital, a nursing home, a kindergarten, a library, a museum, an art museum, an underground mall, a station, or an airport.

Here, the first frequency corresponds to, for example, a wireless frequency band based on an act of the fire defense law in Japan. Specifically, the first frequency corresponds to a wireless frequency band of a wireless station in a low power consumption security system, that is, a 426 MHz wireless frequency band.

In contrast, the second frequency corresponds to a 920 MHz wireless frequency band based on, for example, the standard (global standard IEEE 802.15.4g) of Wi-SUN (registered trademark). In sum, the alarm 1 (e.g., master) performs wireless communication with another alarm 1 (e.g., slave) by a radio wave at a first frequency (426 MHz band) and performs wireless communication with the control apparatus 103 by a radio wave at the second frequency (920 MHz band). Note that the first frequency and the second frequency are not limited to the wireless frequency bands but are accordingly variable based on the radio wave law or fire defense law in each country.

With this configuration, when the wireless communication is performed at the first frequency, the first antenna element 2A is in the electric power receiving state, and the second antenna element 2B is in the grounded state. Moreover, when the wireless communication is performed at the second frequency, the second antenna element 2B is in the electric power receiving state, and the first antenna element 2A is in the opened or grounded state. Thus, when the wireless communication is performed at the first frequency, the second antenna element 2B can function as a ground wire. As a result, for example, it is possible to cover insufficiency of an electrical length of ground by only a ground plane of a circuit board 7 (see FIG. 1) in the alarm 1. Thus, an antenna gain can be improved.

### (2) Details

### (2.1) Overall Configuration

Overall configurations of the alarm 1 including the wireless communication terminal A1 according to the present embodiment and the management system 100 will be described in detail below. In this embodiment, the alarm 1 is, for example, a battery-type alarm. Note that the alarm 1 may be electrically connected to an external power supply (e.g., a commercial power grid) and may operate by converting alternating-current power (e.g., effective value 100 V) supplied from the external power supply into direct-current power.

The management system 100 includes a plurality of (in the example shown in the figures, five) alarms 1 as illustrated in FIGS. 2 and 3. The plurality of alarms 1 are so-called cooperation-type alarms and are each configured to produce an alarm sound in cooperation with the other alarms 1 (together with the other alarms 1) when any of the alarms 1 detects the fire. In the present embodiment, a network is formed via which communication among the plurality of alarms 1 is possible. Here, of five alarms 1, an alarm 1A functions as a master, other alarms 1B to 1E function as slaves, and between the master and each of the slaves, communication is possible (see FIG. 3). In the following description, the four alarms 1B to 1E which function as the slaves are sometimes referred to as slaves 101, and the alarm 1A which functions as the master is sometimes referred to as a master 102.

In the following description, it is assumed that as shown in the example in FIG. 3, the plurality of alarms 1 are each installed on a ceiling surface of a corresponding one of rooms or a staircase in the facility 200 (detached dwelling house). Specifically, the alarm 1A is installed in the space E1, the alarm 1B is installed in the space E2, the alarm 1C is installed in the space E3, the alarm 1D is installed in space E4, and the alarm 1E is installed in the space E5. The space E1 is, for example, a living room. The space E2 is, for example, a bedroom. The space E3 is, for example, a staircase. The space E4 is, for example, a child room. The space E5 is, for example, a kitchen. The example shown in FIG. 3 shows a situation where a fire occurs in the space E1 which is the living room.

As illustrated in FIG. 2, the management system 100 further includes the control apparatus 103 (communication device U1) and the one or a plurality of electric loads 104. The management system 100 further includes an information terminal 105 and an external server 106. The control apparatus 103 is configured to manage the plurality of alarms 1. Moreover, control apparatus 103 is configured to manage the one or more electric loads 104 (specifically, information such as the status of use and the amount of power consumption, of the electric loads 104) other than the alarms 1.

In the example shown in FIG. 3, the control apparatus 103 is installed on a side of a staircase of the first floor (ground floor) in the space E3. The control apparatus 103, the information terminal 105, and the external server 106 will be described later in detail in "(2.3) Control Device".

### (2.2) Alarm

### (2.2.1) Master

First of all, the configuration of the master 102 (alarm 1A) of the plurality of alarms 1 will be described.

The master 102 is configured to detect the occurrence of a fire. The master 102 has a sensing function of sensing the occurrence of a fire in the facility 200 and an alarm function of informing when the master 102 senses the occurrence of the fire in the facility 200. As illustrated in FIG. 2, the master 102 includes the sensor 8, the acoustic section 9, a controller 10, a storage section 11, a communicator 12, a battery 13, a display 14, and a housing 300 (see FIG. 1) which accommodates or holds the sensor 8, the acoustic section 9, the controller 10, the storage section 11, the communicator 12, the battery 13, and the display 14. Note that FIG. 1 is plan view schematically illustrating the interior of the housing 300 in the alarm 1. Here, the communicator 12 corresponds to the wireless communication terminal A1.

In addition, the master 102 further includes circuit modules such as an acoustic circuit and a lighting circuit. Moreover, the master 102 further includes the circuit board 7 (see FIG. 1) on which electronic components constituting the communicator 12, the acoustic circuit, the lighting circuit, and the like are mounted. The battery 13 is, for example, a lithium battery, and the master 102 is operated by electric power supplied from the battery 13.

The controller 10 includes, for example, a computer system including a processor and memory. The processor executes a program stored in the memory, and thereby, the computer system functions as the controller 10. The program to be executed by the processor is stored in the memory of the computer system in advance in this embodiment but may be provided by a non-transitory recording medium such as a memory card storing the program or may be provided over a telecommunications network such as the Internet.

The sensor 8 has a function (sensing function) of sensing information regarding a fire which is a cause of producing of the alarm sound. Here, the sensor 8 is, for example, a photoelectric sensor which senses smoke. Thus, the information regarding the fire includes, for example, information regarding smoke. However, the sensor 8 is not limited to the photoelectric sensor but may be, for example, an isothermal sensor which senses heat. The sensor 8 includes, for example, a light-emitting unit such as a light emitting diode (LED) and a light-receiving unit such as a photodiode. The light-emitting unit and the light-receiving unit are disposed in a labyrinth in the housing 300 of the fire alarm 1 such that a light-receiving surface of the light-receiving unit is deviated from an optical axis of light emitted from the light-emitting unit. At the time of the occurrence of a fire, smoke can be introduced through a pore formed in the housing 300 into the labyrinth.

When no smoke is present in the labyrinth in the housing 300, the light emitted from the light-emitting unit hardly reaches the light-receiving surface of the light-receiving unit. On the other hand, when smoke is present in the labyrinth in the housing 300, the light emitted from the light-emitting unit is scattered by the smoke, and some components of the light thus scattered reach the light-receiving surface of the light-receiving unit. That is, the sensor 8 receives, by the light-receiving unit, the light output from the light-emitting unit and scattered by the smoke. The sensor 8 outputs, to the controller 10, an electric signal (sensing signal) indicating a voltage level according to the quantity of the light received by the light-receiving unit.

The controller 10 determines, based on the sensing signal output from the sensor 8, whether or not a fire occurs. For example, when a voltage level indicated by the sensing signal is higher than or equal to a prescribed threshold, the controller 10 determines that a fire occurs. When receiving a cooperation signal from another alarm 1, the controller 10 also determines that a fire occurs.

The acoustic section 9 and the display 14 constitute an informing unit having a function (informing function) of informing that a fire occurs when the sensor 8 senses the occurrence of the fire in the facility 200.

The acoustic section 9 outputs a sound (sonic wave). When the controller 10 determines the occurrence of a fire in the facility 200, the acoustic section 9 outputs an alarm sound to inform that the fire occurs. The acoustic section 9 includes a loudspeaker configured to convert an electric signal into a sound. The loudspeaker includes a diaphragm and mechanically vibrates the diaphragm in accordance with the electric signal to output the alarm sound. The acoustic section 9 is controlled by the controller 10 to output the alarm sound (e.g., a "beep" sound). The alarm sound includes, for example, a sweep sound with a frequency being swept from low to high and a voice message subsequent to the sweep sound.

If the master 102 senses the occurrence of a fire, the acoustic section 9 of the master 102 outputs a voice message saying, for example, "Fire Fire". In this case, regarding cooperative operation of producing of the plurality of alarms 1, a cooperation source (fire origin) of the producing is the master 102. The other alarms 1 as the cooperation destinations also output voice messages saying, for example, "Fire in another room. Fire in another room". The voice message may include name information indicating an installation location where the alarm 1 as the cooperation source is installed.

During alarming (while an alarm sound is produced), the alarm 1 externally receives operation input (a push operation) via a push button-type operation section, or the like, and then, the acoustic section 9 stops outputting the alarm sound.

The display 14 is, for example, an actuating light including a red LED. The display 14 is off in a normal mode (during monitoring for a fire). When the controller 10 determines that a fire occurs, the display 14 starts flashing (or is turned on). The flashing is stopped when the producing of the alarm sound is stopped.

The storage section 11 includes a device selected from, for example, read only memory (ROM), random access memory (RAM), electrically erasable programmable read only memory (EEPROM), and the like. The storage section 11 stores a unique identifier (identification information) which is assigned to the alarm 1. When the alarm 1 manages the other alarms 1, the storage section 11 further stores pieces of identification information assigned to the other alarms 1. The identification information is the IP address, Mac address, name, or the like of the alarm 1. The storage section 11 further stores alarm message data according to the voice message. The storage section 11 may be memory of the controller 10.

The communicator 12 (wireless communication terminal A1) is configured to perform wireless communication at a first frequency (band) and a second frequency (band) which are different from each other. Here, as described above, it is assumed that the first frequency band is a 426 MHz band, and the second frequency band is a 920 MHz band. That is, the first frequency (band) is lower than the second frequency (band).

As illustrated in FIGS. 5 and 6, the communicator 12 includes the wireless circuit 3, the first antenna element 2A, the second antenna element 2B, a switching unit 4 (omitted in FIG. 6), and a switching unit 5 (omitted in FIG. 5). The communicator 12 further includes a switch circuit 15 for switching between transmission and reception. In addition, the communicator 12 may further include a surface acoustic wave (SAW) filter and the like.

The wireless circuit 3 is controlled by the controller 10 and performs at least one of transmission or reception (in this embodiment both the transmission and reception) of a radio signal via the first antenna element 2A and the second antenna element 2B. Note that the controller 10 may have at least some of functions of the wireless circuit 3. Circuit components included in the communicator 12 are mounted on the circuit board 7 (see FIG. 1: printed circuit board).

The wireless circuit 3 includes, for example, a processing unit. The processing unit includes, for example, a computer system including a processor and memory. The processor executes a program stored in the memory, and thereby, the computer system functions as the processing unit of the wireless circuit 3. The program to be executed by the processor is stored in the memory of the computer system in advance in this embodiment but may be provided by a non-transitory recording medium such as a memory card storing the program or may be provided over a telecommunications network such as the Internet.

When the wireless circuit 3 performs wireless communication with another alarm 1, the wireless circuit 3 controls the switch circuit 15, the switching unit 4, and the switching unit 5 such that a signal (e.g., a cooperation signal for producing an alarm sound in a cooperative manner) at the first frequency is receivable or transmittable. In the following description, a mode for transmission of a signal at the first frequency is sometimes referred to as a "first frequency transmission mode", and a mode for reception of the signal at the first frequency is sometimes referred to as a "first frequency reception mode".

Moreover, when the wireless circuit 3 performs wireless communication with the control apparatus 103, the wireless circuit 3 controls the switch circuit 15, the switching unit 4, and the switching unit 5 such that a signal (e.g., a notification signal configured to give a notification of the occurrence of a fire to the outside) at the second frequency is transmittable. Moreover, the wireless circuit 3 controls the switch circuit 15, the switching unit 4, and the switching unit 5 such that a signal (e.g., an update signal for updating setting information in the storage section 11 from the control apparatus 103) at the second frequency is receivable. In the following description, a mode for transmission of a signal at the second frequency is sometimes referred to as a "second frequency transmission mode", and a mode for receiving a signal at the second frequency is sometimes referred to as a "second frequency reception mode".

In other words, the processing unit of the wireless circuit 3 has the four operation modes. Alternatively, the controller 10 may include the four operation modes, and the switch circuit 15, the switching unit 4, and the switching unit 5 may be controlled by the controller 10.

The first antenna element 2A is formed from, for example, a metal wire (rod-like wire). The first antenna element 2A constitutes a linear antenna. It is assumed that the first antenna element 2A is an antenna element of a monopole antenna. For the first antenna element 2A, the electrical length of a ground wire is an important factor for the antenna gain. Since the first frequency band is a 426 MHz band, the signal wavelength is about 70 cm, and the electrical length of the ground wire for the first antenna element 2A is preferably 1/4 of the wavelength, that is, about 17 cm or longer.

The second antenna element 2B is formed from, for example, a metal wire (rod-like wire). The second antenna element 2B constitutes a linear antenna. It is assumed that the second antenna element 2B is an antenna element of a monopole antenna. For the second antenna element 2B, the electrical length of a ground wire is an important factor for the antenna gain. Since the second frequency band is a 920 MHz band, the signal wavelength is about 32 cm, and the electrical length of the ground wire for the second antenna element 2B is preferably 1/4 of the wavelength, that is, about 8 cm or longer.

As illustrated in FIG. 1, the circuit board 7 includes a first connector 71 and a second connector 72. The first connector 71 is connected to one end of the first antenna element 2A, and the second connector 72 is connected to one end of the second antenna element 2B. Note that each of the first antenna element 2A and the second antenna element 2B has the other end which is located on an opposite side of the one end and which is an open end 20 (see FIG. 1).

The first connector 71 is disposed in the vicinity of the second connector 72. The first connector 71 and the second connector 72 are adjacent to each other with a distance of, for example, several millimeters to one centimeter provided therebetween.

Each of the first connector 71 and the second connector 72 has an insertion hole into which, for example, a screw for screwing the circuit board 7 to a bottom part in the housing 300 is insertable. That is, each of the first antenna element 2A and the second antenna element 2B is fixed to the circuit board 7 by jointly fastening.

In the vicinity of the first connector 71, a feeding point P1 (see FIGS. 5 and 6) of the first antenna element 2A is provided. In the vicinity of the second connector 72, a feeding point P2 (see FIGS. 5 and 6) of the second antenna element 2B is provided.

The feeding point P1 is electrically connected via a first electric path W1 to the switch circuit 15. Note that as illustrated in FIG. 6, the switching unit 5 is inserted into the first electric path W1. The switching unit 5 can include, for example, a semiconductor switch for a high frequency but may include a semiconductor relay. The switching unit 5 switches between the electric power receiving state of the first antenna element 2A and the grounded state of the first antenna element 2A. When the first antenna element 2A is in the grounded state, the first antenna element 2A is electrically connected to a ground plane of the circuit board 7. In the example shown in FIG. 6, the first antenna element 2A is switched to the electric power receiving state.

The feeding point P2 is electrically connected via a second electric path W2 to the switch circuit 15. Note that as illustrated in FIG. 5, the switching unit 4 is inserted into the second electric path W2. The switching unit 4 can include, for example, a semiconductor switch for a high frequency but may include a semiconductor relay. The switching unit 4 switches between the electric power receiving state of the second antenna element 2B and the grounded state of the second antenna element 2B. When the second antenna element 2B is in the grounded state, the second antenna element 2B is electrically connected to the ground plane of the circuit board 7. In the example shown in FIG. 5, the second antenna element 2B is switched to the grounded state.

The switch circuit 15 is configured to switch between transmission and reception of the radio signal. The switch circuit 15 can include, for example, a semiconductor switch for a high frequency. The switch circuit 15 includes a pair of terminals on a primary side, and each of the terminals is electrically connected to a corresponding one of a reception terminal Rx and a transmission terminal Tx of the wireless circuit 3. The switch circuit 15 has a pair of terminals on a secondary side, and each of the terminals is electrically connected to a corresponding one of the first electric path W1 and the second electric path W2.

Here, it is highly possible that the electrical length of the ground wire for an antenna element (in particular, the first antenna element 2A) is difficultly covered by only the size of the ground plane of the circuit board 7. In particular, downsizing is desirable in the alarm 1 in, for example, a home alarm. Therefore, it is not easy to secure a ground plane for the first antenna element 2A and the second antenna element 2B in a limited accommodation space in the housing 300.

Thus, in the present embodiment, the communicator 12 is configured such that when the communicator 12 performs the wireless communication at the first frequency, the first antenna element 2A is in the electric power receiving state (see FIG. 6) and the second antenna element 2B is in the grounded state (see FIG. 5). That is, the second antenna element 2B functions as a ground wire for the first antenna element 2A.

The communicator 12 is configured such that when the communicator 12 performs the wireless communication at the second frequency, the second antenna element 2B is in the electric power receiving state and the first antenna element 2A is in the grounded state. That is, the first antenna element 2A functions as a ground wire for the second antenna element 2B.

A more specific description will be given below based on the four operation modes (first frequency transmission mode, first frequency reception mode, second frequency transmission mode, and second frequency reception mode).

The first frequency reception mode is a mode in which a signal (which can include, for example, a cooperation signal and a response signal) transmitted from another alarm 1 by a radio wave at the first frequency band (426 MHz band) is receivable. For example, the wireless circuit 3 stands by in the first frequency reception mode in the normal mode (during monitoring for a fire). In the first frequency reception mode, the wireless circuit 3 controls the switch circuit 15 such that the reception terminal Rx is electrically connected to the first antenna element 2A. Moreover, the wireless circuit 3 controls the switching unit 5 such that the first antenna element 2A is in the electric power receiving state. Furthermore, the wireless circuit 3 controls the switching unit 4 such that the second antenna element 2B is in the grounded state. The wireless circuit 3 in the first frequency reception mode can receive a signal from anther alarm 1 via the first antenna element 2A.

If the alarm 1 (master 102) in the first frequency reception mode receives a cooperation signal from another alarm 1 (slave 101), the alarm 1 (master 102) also starts producing an alarm sound, and the wireless circuit 3 switches the operation mode to the first frequency transmission mode. Then, the alarm 1 (master 102) transmits a cooperation signal including a production instruction for causing the other alarms 1 (slaves 101) to produce alarm sounds in a cooperative manner. Needless to say, also when the alarm 1 (master 102) senses a fire, the wireless circuit 3 switches the operation mode to the first frequency transmission mode to transmit the cooperation signal to another alarm 1 (slave 101).

The first frequency transmission mode is a mode in which the wireless circuit 3 transmits a signal (which can include, for example, a cooperation signal and a synchronization signal) to the other alarms 1 by a radio wave at the first frequency band (426 MHz band). In the first frequency transmission mode, the wireless circuit 3 controls the switch circuit 15 such that the transmission terminal Tx is electrically connected to the first antenna element 2A. Moreover, the wireless circuit 3 controls the switching unit 5 such that the first antenna element 2A is in the electric power receiving state. Furthermore, the wireless circuit 3 controls the switching unit 4 such that the second antenna element 2B is in the grounded state. The wireless circuit 3 in the first frequency transmission mode can transmit a signal to anther alarm 1 via the first antenna element 2A.

For example, when the alarm 1 (master 102) finishes transmitting a cooperation signal to another alarm 1 (slave 101), the wireless circuit 3 switches the operation mode to the second frequency transmission mode. Then, the alarm 1 (master 102) transmits, to the control apparatus 103, a notification signal for notifying that a fire occurs.

The second frequency transmission mode is a mode in which the wireless circuit 3 transmits a signal (which can include, for example, a notification signal and a signal including identification information) to the control apparatus 103 by a radio wave at the second frequency band (920 MHz band). In the second frequency transmission mode, the wireless circuit 3 controls the switch circuit 15 such that the transmission terminal Tx is electrically connected to the second antenna element 2B. Moreover, the wireless circuit 3 controls the switching unit 4 such that the second antenna element 2B is in the electric power receiving state. Furthermore, the wireless circuit 3 controls the switching unit 5 such that the first antenna element 2A is in the grounded state. The wireless circuit 3 in the second frequency transmission mode can transmit a signal to the control apparatus 103 via the second antenna element 2B.

Here, the control apparatus 103 may transmit a signal to the alarm 1 (master 102). The signal mentioned herein can include, for example, an update signal for updating the setting information and the program in the storage section 11 of the alarm 1 and a request signal for requesting, for example, the identification information of the alarm 1. Thus, the wireless circuit 3 intermittently switches the operation mode to the second frequency reception mode in the normal mode (during monitoring for a fire) such that a signal from the control apparatus 103 is receivable.

The second frequency reception mode is a mode in which a signal (e.g., update signal and request signal) transmitted from the control apparatus 103 by a radio wave at the second frequency band (920 MHz band) is receivable. In the second frequency reception mode, the wireless circuit 3 controls the switch circuit 15 such that the reception terminal Rx is electrically connected to the second antenna element 2B. Moreover, the wireless circuit 3 controls the switching unit 4 such that the second antenna element 2B is in the electric power receiving state. Furthermore, the wireless circuit 3 controls the switching unit 5 such that the first antenna element 2A is in the grounded state. The wireless circuit 3 in the second frequency reception mode can receive a signal from the control apparatus 103 via the second antenna element 2B.

Note that the above-described timings at which the four operation modes are switched are mere examples and are not particularly limited.

### (2.2.2) Slave (First Alarm)

Next, configurations of the four slaves 101 (alarms 1B to 1E) of the plurality of alarms 1 will be described briefly. In the following description, components the same as those in the master 102 (alarm 1A) are denoted by the same reference signs as those in the master 102, and the description thereof is accordingly omitted.

Similarly to the master 102, each slave 101 has a sensing function of sensing the occurrence of a fire in the facility 200 and an alarm function of providing information when each slave 101 senses the occurrence of the fire in the facility 200.

Similarly to the master 102, each slave 101 includes a sensor 8, an acoustic section 9, a controller 10, a storage section 11, a communicator 12, a battery 13, a display 14, and a housing 300 (see FIG. 1). In addition, each slave 101 further includes: circuit modules such as an acoustic circuit and a lighting circuit; and a circuit board 7.

Each slave 101 does not communicate with the control apparatus 103 but communicates with only the alarm 1 (master 102). Therefore, an antenna element in the communicator 12 in each slave 101 may be only a first antenna element 2A for communication by a radio wave at a first frequency band (426 MHz band). In this case, in place of the second antenna element 2B, a ground wire dedicated for the first antenna element 2A may be provided, and the switching units 4 and 5 may be omitted.

Alternatively, for example, the alarms 1 having the same configurations are configured to be set as any of the slaves 101 or the master 102 in accordance with a switching operation given to a dip switch or the like provided to the housing 300. In this case, each slave 101 may include the communicator 12 corresponding to the wireless communication terminal A1. Note that the alarm 1 set as the slave 101 does not have to use the second antenna element 2B also when the alarm 1 has a function as the communicator 12 (wireless communication terminal A1).

When the slave 101 senses the occurrence of a fire, the slave 101 transmits a cooperation signal via the communicator 12 to the master 102 so that the slave 101 serves as a cooperation source to cause the other alarms 1 to produce an alarm sound in a cooperative manner. Moreover, each slave 101 is configured to, when the slave 101 senses the occurrence of a fire, start outputting an alarm sound from the acoustic section 9 of the slave 101 and cause the display 14 of the slave 101 to flash.

On the other hand, each slave 101 is configured to, when each slave 101 receives a cooperation signal from the master 102 via the communicator 12, start outputting an alarm sound from the acoustic section 9 of each slave 101 and cause the display 14 of the slave 101 to flash.

### (2.3) Control Device

The control apparatus 103 (control device) is, for example, a controller of a home energy management system (HEMS). The control apparatus 103 is configured to communicate with a plurality of electric loads 104 (only one of them is shown in FIG. 2) provided in the facility 200. The plurality of electric loads 104 can include, for example, an air conditioning apparatus, an illumination apparatus, and a water heater which have communication functions. In the present embodiment, the control apparatus 103 is also configured to communicate with the master 102 (alarm 1A) provided in the facility 200. Moreover, the control apparatus 103 is configured to communicate with the plurality of slaves 101 (alarms 1B to 1E) via the master 102.

As illustrated in FIG. 2, the control apparatus 103 includes a controller D1, a communicator D2, a storage section D3, a display D4, and the like.

The controller D1 includes, for example, a computer system including a processor and memory. The processor executes a program stored in the memory, and thereby, the computer system functions as the controller D1. The program to be executed by the processor is stored in the memory of the computer system in advance in this embodiment but may be provided by a recording medium such as a memory card storing the program or may be provided over a telecommunications network such as the Internet.

The communicator D2 includes a first communication interface for communication with the master 102 and the like by a radio wave at the second frequency band (920 MHz band). The communicator D2 includes a second communication interface for communication with the information terminal 105 and the external server 106 via a network NT1 (see FIG. 4) such as the Internet. The second communication interface may communicate with the information terminal 105 via another device such as the external server 106.

The information terminal 105 is, for example, a smartphone or a tablet terminal carried by a user (e.g., dweller) of the facility 200. In the present embodiment, the information terminal 105 is assumed to be a smartphone. Dedicated application software which enables the information terminal 105 to perform wireless communication with the control apparatus 103 is installed in the information terminal 105.

The storage section D3 includes a device selected from, for example, read only memory (ROM), random access memory (RAM), electrically erasable programmable read only memory (EEPROM), and the like. The storage section D3 stores, for example, pieces of identification information of the plurality of alarms 1. The storage section D3 may store the pieces of identification information of the alarms 1 in association with information regarding installation locations (spaces E1 to E5) of the alarms 1. In addition, the storage section D3 stores information (e.g., telephone number) regarding the information terminal 105.

The display D4 is, for example, a thin display device such as a liquid crystal display or organic electroluminescence (EL) display. When the display D4 is a touch panel-type display device, the display D4 may also have a function as an operation section configured to receive an operation given by a user.

When the controller D1 receives a notification signal from the master 102 via the first communication interface, the controller D1 causes, based on the notification signal, the display D4 to display information that a fire occurs. The controller D1 may cause the display D4 to display an installation location of an alarm 1 which is located at a fire source.

Alternatively, when the external server 106 is a server device managed by a security company or the like, the control apparatus 103 may notify, based on the notification signal received, the external server 106 of information that a fire occurs via the second communication interface. Alternatively, the control apparatus 103 may notify, based on the notification signal acquired, the information terminal 105 of information that a fire occurs.

### (2.4) Operation

Operation of the management system 100 in the case of sensing of a fire will be briefly described below.

### [First Operation Example]

First of all, operation for a case where the master 102 (alarm 1A) senses a fire will be described.

When the master 102 senses a fire, the master 102 outputs a voice message saying "Fire Fire" subsequent to a sweep sound (production start of alarm sound). Moreover, the master 102 transmits a cooperation signal from the first antenna element 2A of the communicator 12 to the other four slaves 101 by a radio wave at the first frequency band (426 MHz band). Then, in cooperation with the production of the alarm sound of the master 102, each slave 101 outputs a voice message saying "Fire in another room. Fire in another room" subsequent to a sweep sound.

In addition, the master 102 transmits a notification signal to the control apparatus 103 from the second antenna element 2B of the communicator 12 by a radio wave at the second frequency band (920 MHz band). The control apparatus 103 displays, based on the notification signal received, information that a fire occurs in the living room (space E1) in the facility 200 on the display D4, and the control apparatus 103 notifies the information terminal 105, the external server 106, and the like of the occurrence of the fire in the living room.

### [Second Operation Example]

Next, operation for a case where any of the four slaves 101 (alarms 1B to 1E) senses a fire will be described. Here, for example, it is assumed that the alarm 1E installed in the kitchen senses a fire.

When the alarm 1E as a slave 101 senses a fire, the alarm 1E outputs a voice message saying "Fire Fire" subsequent to a sweep sound (production start of alarm sound). Moreover, the alarm 1E transmits a cooperation signal from the first antenna element 2A of the communicator 12 to the master 102 by a radio wave at the first frequency band (426 MHz band). The master 102 which has received the cooperation signal outputs, in cooperation of the production of the alarm 1E, a voice message saying "Fire in another room. Fire in another room" subsequent to a sweep sound.

Moreover, the master 102 transmits a cooperation signal from the first antenna element 2A of the communicator 12 to the other three slaves 101 by a radio wave at the first frequency band (426 MHz band). As a result, the other three slaves 101 also start producing an alarm sound.

In addition, the master 102 transmits a notification signal to the control apparatus 103 from the second antenna element 2B of the communicator 12 by a radio wave at the second frequency band (920 MHz band) in a similar manner to the first operation example.

In the present embodiment, when the master 102 performs the wireless communication at the first frequency, the first antenna element 2A is in the electric power receiving state and the second antenna element 2B is in the grounded state in either the first operation example or the second operation example. Moreover, when the master 102 performs the wireless communication at the second frequency, the second antenna element 2B is in the electric power receiving state and the first antenna element 2A is in the grounded state. Thus, it is possible to cover insufficiency of the electrical length of ground by only the ground plane of the circuit board 7. Thus, an antenna gain can be improved.

Moreover, for example, it is possible to suppress that the number of metal wires (the number of components) increases from two to three as compared to a case where a ground wire (metal wire) dedicated for the first antenna element 2A is provided in addition to the first antenna element 2A and the second antenna element 2B. In particular, the influence of an assembling process of metal wires may severely affect the manufacturing cost if the number of the metal wires increases. Specifically, other electronic components are bonded in a reflow solder step, whereas the metal wires require a jointly-fastening step of screwing the metal wires to the circuit board 7 and a flow solder step, and therefore, as the number of metal wires increases, the manufacturing cost increases. Moreover, the metal wires fixed to the circuit board 7 may be bent in an unintended direction during transportation or the like to the next step. In sum, it is not desirable that the number of metal wires increases. In this regard, the second antenna element 2B also has a function of the ground wire as a shared element, and therefore, assembly easiness and the like can be improved.

Moreover, in the present embodiment, the switching units 4 and 5 change the states of the first antenna element 2A and the second antenna element 2B, and therefore, it is possible to more accurately perform switching of the state of each antenna element.

### (2.5) Antenna Element

Each of the first antenna element 2A and the second antenna element 2B which have linear shape in the present embodiment has a protrusion portion X1 as illustrated in FIG. 1. FIG. 1 is a plan view (top view) illustrating an interior of the housing 300 viewed from a ceiling surface, for example, when the alarm 1 is attached to the ceiling surface.

The protrusion portion X1 has the open end 20, and when viewed along the thickness direction of the circuit board 7, the protrusion portion X1 is disposed to outwardly protrude beyond an edge 70 of the circuit board 7. Here, each protrusion portion X1 occupies a region larger than or equal to a half the entire length of a corresponding one of the antenna elements when viewed along the thickness direction of the circuit board 7.

In the present embodiment, as illustrated in FIG. 1, the circuit board 7 which has a substantially rectangular plate-like shape and the battery 13 which is rectangular are aligned with each other and accommodated in the housing 300 when viewed along the thickness direction of the circuit board 7. In the following description, a direction in which the circuit board 7 and the battery 13 are aligned with each other is sometimes referred to as a first direction J1, and a direction orthogonal to the thickness direction and the first direction J1 is sometimes referred to as a second direction J2. The first connector 71 of the circuit board 7 is disposed in the vicinity of one edge portion 70A (in FIG. 1, upper edge portion) of both edge portions of the circuit board 7 in the first direction J1. The second connector 72 is disposed laterally (in FIG. 1, on the left of) in alignment with the first connector 71 along the second direction J2.

For example, in a state where one end of the first antenna element 2A is connected to the first connector 71, the first antenna element 2A extends straight and in parallel to a surface of the circuit board 7 from the one end to the first point F1 along the second direction J2. That is, the first antenna element 2A extends straight to the vicinity of a peripheral wall 300A of the housing 300. The peripheral wall 300A has a round shape in plan view. The first antenna element 2A is slightly bent at the first point F1 and extends in an arc shape to a second point F2 along the peripheral wall 300A having a round shape. The first antenna element 2A is inwardly bent at a substantially right angle at the second point F2 to be away from the battery 13 and extends to a third point F3 to approach the circuit board 7. The first antenna element 2A is inwardly bent at a substantially right angle at the third point F3, extends in a direction to approach the first point F1, and has a tip end provided with the open end 20.

In sum, the first antenna element 2A is accommodated in the housing 300 in a state where the first antenna element 2A is bent to have a substantially hook-shape as a whole. The protrusion portion X1 of the first antenna element 2A corresponds to a portion extending from the first point F1 to the open end 20.

For example, in a state where one end of the second antenna element 2B is connected to the second connector 72, the second antenna element 2B shortly extends from the one end to the vicinity of the peripheral wall 300A of the housing 300 and further extends in an arc shape along the peripheral wall 300A to approach the battery 13. The second antenna element 2B has a tip end provided with the open end 20.

In sum, the second antenna element 2B is accommodated in the housing 300 in a state where the second antenna element 2B is bent to have a substantially arc shape as a whole. The protrusion portion X1 of the second antenna element 2B occupies a region corresponding to substantially full length of the second antenna element 2B.

Here, if the first antenna element 2A is disposed such that the projection area of the first antenna element 2A for the circuit board 7 occupies a half or more of the entire length, an induced current may occur in the circuit board 7 when the wireless communication is performed by a radio wave at the first frequency band. As a result, the antenna gain may decrease. Similarly, if the second antenna element 2B is disposed such that the projection area of the second antenna element 2B occupies a half or more of the entire length, the occurrence of an induced current may reduce the antenna gain.

In contrast, in the present embodiment, each of the first antenna element 2A and the second antenna element 2B includes the protrusion portion X1, and therefore, when the wireless communication is performed by a radio wave at a corresponding frequency band, it is possible to reduce the possibility of the occurrence of the induced current in the circuit board 7.

Moreover, in the battery 13, cells are accommodated in a casing made of metal, and therefore, if the first antenna element 2A and the second antenna element 2B are disposed to overlap the battery 13, an induced current occurs in the casing made of metal, and the antenna gain may decrease. However, the first antenna element 2A and the second antenna element 2B of the present embodiment are disposed to be apart from the battery 13, and therefore, it is possible to reduce the possibility of the occurrence of an induction current in the casing of the battery 13.

Specifically, for example, the length of the second antenna element 2B is determined to satisfy the condition formula: λ₂/4 < L < λ₁/4, where L denotes the length of the second antenna element 2B, λ₁ denotes the wavelength of the first frequency, and λ₂ denotes the wavelength of the second frequency.

That is, in order that the second antenna element 2B may function as a shared element, that is, in order that the second antenna element 2B may function as a ground wire at the first frequency and as an antenna element at the second frequency, the length of the second antenna element 2B is defined such that about 8 cm < L < about 17 cm.

In the present embodiment, the first connector 71 located in the vicinity of the feeding point P1 is in the vicinity of the second connector 72 located in the vicinity of the feeding point P2, and the feeding point P1 and the feeding point P2 are also located relatively closely to each other. Moreover, the wireless circuit 3 is also located in the vicinity of the feeding point P1 and the feeding point P2, and therefore, it is difficult to secure part of the electrical length of the ground wire by the size of the ground plane of the circuit board 7. When only a function as the ground wire for the first antenna element 2A is taken into consideration, the length of the second antenna element 2B may be equal to or longer than 17 cm. However, when the function as an antenna element at the second frequency, the (limited) accommodation space in the housing 300, the positional relationship of the battery 13, and the like are taken into consideration, a range satisfying the condition formula is preferable.

### (3) Variation

The embodiment is a mere example of various embodiments of the present disclosure. Various modifications may be made depending on design and the like as long as the object of the present disclosure can be achieved. Moreover, functions similar to the wireless communication terminal A1, the alarm 1, and the management system 100 of the embodiment may be embodied by: a control method of the wireless communication terminal A1, the alarm 1, and the management system 100; a computer program, a non-transitory recording medium in which the computer program is stored, or the like.

Variations of the embodiment will be described below. Note that any of the variations to be described below may be combined as appropriate. In the following description, the embodiment described above will be sometimes referred to as a "basic example".

The controller 10 of the alarm 1, a processing unit of the wireless circuit 3, and a controller D1 of the control apparatus 103 in the present disclosure include computer systems. The computer system includes a processor and memory as hardware as main components. The processor executes a program stored in the memory of the computer system, thereby realizing functions as the controller 10, the processing unit of the wireless circuit 3, and the controller D1 in the present disclosure. The program may be stored in the memory of the computer system in advance, provided via telecommunications network, or provided as a non-transitory recording medium such as a computer system-readable memory card, optical disc, or hard disk drive storing the program. The processor of the computer system includes one or a plurality of electronic circuits including semiconductor integrated circuits (IC) or large-scale integrated circuits (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). A field-programmable gate array (FPGA), which is programmable after fabrication of the LSI, or a logical device which allows reconfiguration of connections in LSI or reconfiguration of circuit cells in LSI may be adopted as the processor. Those electronic circuits may be either integrated together on a single chip or distributed on multiple chips without limitation. The plurality of chips may be collected in one device or may be distributed in a plurality of devices. As mentioned herein, the computer system includes a microcontroller including one or more processors and one or more memories. Thus, the microcontroller is also composed of one or more electronic circuits including a semiconductor integrated circuit or a large-scale integrated circuit.

Moreover, collecting a plurality of functions of each of the wireless communication terminal A1, the alarm 1, and the control apparatus 103 in one housing is not essential for the wireless communication terminal A1, the alarm 1, and the control apparatus 103. Components included in each of the wireless communication terminal A1, the alarm 1, and the control apparatus 103 may be distributed in a plurality of housings. Moreover, at least some functions of the wireless communication terminal A1 and the alarm 1, for example, some functions of the alarm 1 may be realized by cloud (cloud computing) or the like. Similarly, at least some functions of the control apparatus 103, for example, some functions of the control apparatus 103 may be realized by cloud or the like. In contrast, as in the basic example, a plurality of functions of the wireless communication terminal A1 and the alarm 1 may be collected in one housing 300, and a plurality of functions of the control apparatus 103 may be collected in one housing.

### (3.1) First Variation: Matching Circuit (First Option)

With reference to FIG. 7, a first variation of the wireless communication terminal A1 (communicator 12) will be described below. Note that components substantially common to those of the basic example are denoted by the same reference signs as those in the basic example, and the description thereof will be accordingly omitted.

The wireless communication terminal A1 of the basic example includes the switching unit 4 configured to switch between the electric power receiving state of the second antenna element 2B and the grounded state of the second antenna element 2B. In contrast, the wireless communication terminal A1 of the first variation is different from the basic example in that a matching circuit 6B (see FIG. 7) is provided in place of the switching unit 4.

The matching circuit 6B is electrically inserted between a wireless circuit 3 and a second antenna element 2B. Specifically, the matching circuit 6B is inserted in a second electric path W2 which electrically connects a switch circuit 15 to a feeding point P2. The matching circuit 6B is configured to match a first impedance of a side of the wireless circuit 3 viewed from the matching circuit 6B and a second impedance of a side of the second antenna element 2B viewed from the matching circuit 6B to each other.

The matching circuit 6B is configured such that the second impedance becomes lower than the first impedance when the wireless communication is performed at the first frequency (426 MHz band). The matching circuit 6B is configured such that the second impedance is matched to the first impedance when the wireless communication is performed at the second frequency (920 MHz band).

Here, for example, the matching circuit 6B includes a first inductor L1, a second inductor L2, and a capacitor C0. The first inductor L1 has a first end electrically connected to the second electric path W2, and the first inductor L1 has a second end which is grounded. That is, the second end of the first inductor L1 is electrically connected to a ground plane of a circuit board 7. The second inductor L2 has a first end electrically connected to the second electric path W2, and the second inductor L2 has a second end which is grounded. That is, the second end of the second inductor L2 is electrically connected to the ground plane of the circuit board 7. The capacitor C0 is inserted into the second electric path W2 between the first end of the first inductor L1 and the first end of the second inductor L2. However, the circuit configuration of the matching circuit 6B described above is a mere example, and the number of inductors and capacitors, and the like may be accordingly modified in design. For example, the second inductor L2 may be omitted.

The matching circuit 6B is designed such that if the first impedance of the side of the wireless circuit 3 is, for example, 50 Ω, the second impedance also becomes 50 Ω as viewed from the wireless circuit 3 when the wireless communication is performed at the second frequency (920 MHz band). As a result, as viewed from the wireless circuit 3, the second antenna element 2B can be supplied with electric power with low loss due to the matching circuit 6B.

The matching circuit 6B is designed such that if, in contrast, the wireless communication is performed at the first frequency (426 MHz band), the second impedance becomes lower than the first impedance which is 50 S2 as viewed from the wireless circuit 3. Here, the matching circuit 6B is designed such that the second impedance approaches zero at the first frequency lower than the second frequency. That is, when the frequency lowers from 920 MHz to 426 MHz, the impedance of the capacitor C0 increases while the impedance of the first inductor L1 which is grounded decreases. Thus, when viewed from the wireless circuit 3, the second antenna element 2B is in the grounded state, and the second antenna element 2B functions as a ground wire for the first antenna element 2A. In sum, the second electric path W2 connected to the second antenna element 2B is short-circuited by the matching circuit 6B at the first frequency (426 MHz band).

With this configuration, providing the matching circuit 6B enables the wireless communication terminal A1 having a cost-effective configuration to be realized as compared to a case where the (relatively expensive) switching unit 4 executes switching of the states of the second antenna element 2B as in the case of the basic example.

### (3.2) Second Variation: Matching Circuit (Second Option)

With reference to FIG. 8, a second variation of the wireless communication terminal A1 (communicator 12) will be described below. Note that components substantially common to those of the basic example are denoted by the same reference signs as those in the basic example, and the description thereof will be accordingly omitted.

The wireless communication terminal A1 of the basic example includes the switching unit 5 configured to switch between the electric power receiving state of the first antenna element 2A and the grounded state of the first antenna element 2A. In contrast, a wireless communication terminal A1 of the second variation is different from the basic example in that a matching circuit 6A (see FIG. 8) is provided in place of the switching unit 5.

The matching circuit 6A is electrically inserted between a wireless circuit 3 and a first antenna element 2A. Specifically, the matching circuit 6A is inserted in a first electric path W1 which electrically connects a switch circuit 15 to a feeding point P1. The matching circuit 6A is configured to match a first impedance of a side of the wireless circuit 3 viewed from the matching circuit 6A and a second impedance of a side of the first antenna element 2A viewed from the matching circuit 6A to each other.

The matching circuit 6A is configured such that the second impedance is matched to the first impedance when wireless communication is performed at the first frequency (426 MHz band). The matching circuit 6A is configured such that the second impedance becomes lower than the first impedance when the wireless communication is performed at the second frequency (920 MHz band).

Here, for example, the matching circuit 6A includes a first capacitor C1, a second capacitor C2, and an inductor L0. The first capacitor C1 has a first end electrically connected to the first electric path W1, and the first capacitor C1 has a second end which is grounded. That is, the second end of the first capacitor C1 is electrically connected to a ground plane of a circuit board 7. The second capacitor C2 has a first end electrically connected to the first electric path W1, and the second capacitor C2 has a second end which is grounded. That is, the second end of the second capacitor C2 is electrically connected to the ground plane of the circuit board 7. The inductor L0 is inserted into the first electric path W1 between the first end of the first capacitor C1 and the first end of the second capacitor C2. The circuit configuration of the matching circuit 6A described above is a mere example, and the number of inductors and capacitors, and the like may be accordingly modified in design.

The matching circuit 6A is designed such that if the first impedance of the side of the wireless circuit 3 is, for example, 50 Ω, the second impedance also becomes 50 S2 as viewed from the wireless circuit 3 when the wireless communication is performed at the first frequency (426 MHz band). As a result, as viewed from the wireless circuit 3, the first antenna element 2A can be supplied with electric power with low loss due to the matching circuit 6A.

The matching circuit 6A is designed such that if, in contrast, the wireless communication is performed at the second frequency (920 MHz band), the second impedance becomes lower than the first impedance which is 50 S2 as viewed from the wireless circuit 3. That is, when the frequency increases from 426 MHz to 920 MHz, the impedance of the inductor L0 increases while the impedance of the first capacitor C1 which is grounded decreases. Thus, when viewed from the wireless circuit 3, the first antenna element 2A is in the grounded state.

The matching circuit 6A may be configured such that the second impedance is higher than the first impedance when the wireless communication is performed at the second frequency (920 MHz band). In this case, as viewed from the wireless circuit 3, the first antenna element 2A may be in an open state. For example, the matching circuit 6A may be configured such that the circuit configuration of the matching circuit 6B shown in FIG. 7 is applied to the second variation, and the second impedance is matched to the first impedance at the first frequency (426 MHz band). In this case, when the frequency increases from 426 MHz to 920 MHz, the first antenna element 2A transitions to the opened state as viewed from the wireless circuit 3. That is, when the wireless communication is performed at the second frequency, the first antenna element 2A does not necessarily have to function as the ground wire for the second antenna element 2B but may be in the opened state.

With this configuration, providing the matching circuit 6A enables the wireless communication terminal A1 having a cost-effective configuration to be realized as compared to a case where the (relatively expensive) switching unit 5 executes switching of the states of the first antenna element 2A as in the case of the basic example. Note that combining the first variation and the second variation with each other enables the wireless communication terminal A1 having a more cost-effective configured to be realized.

### (3.3) Other Variations

In the basic example, the type of an antenna is a monopole antenna, and each of the first antenna element 2A and the second antenna element 2B constitutes a linear antenna. However, at least one of the first antenna element 2A or the second antenna element 2B may constitute an inverted-F antenna, an inverted-L antenna, a helical antenna, or a chip antenna.

In the basic example, both the first antenna element 2A and the second antenna element 2B include the protrusion portions X1. However, only one of the first antenna element 2A and the second antenna element 2B may include the protrusion portion X1.

In the basic example, the wireless circuit 3 is constituted by one circuit. However, the wireless circuit 3 may be constituted by, for example, two circuits, and the respective two circuits may perform the wireless communication at the first frequency band and the wireless communication at the second frequency band.

In the basic example, the wireless communication terminal A1 is applied to the fire alarm 1 which has both a sensing function of sensing a fire and a production function of producing an alarm sound. However, the wireless communication terminal A1 may be applied to, for example, a fire detector having only the sensing function of sensing a fire. Moreover, a target to be sensed is not limited to a fire but may be water damage, earthquake, gas leakage, the occurrence of CO (carbon monoxide) due to unburning or the like, and the wireless communication terminal A1 may be applied to a sensor configured to sense such an event.

### Reference Signs List

- 100: MANAGEMENT SYSTEM
- 103: CONTROL APPARATUS
- 104: ELECTRIC LOAD
- 1: FIRE ALARM
- A1: WIRELESS COMMUNICATION TERMINAL
- 2A: FIRST ANTENNA ELEMENT
- 2B: SECOND ANTENNA ELEMENT
- 20: OPEN END
- 3: WIRELESS CIRCUIT
- 4, 5: SWITCHING UNIT
- 6A, 6B: MATCHING CIRCUIT
- 7: CIRCUIT BOARD
- 70: EDGE
- 71: FIRST CONNECTOR
- 72: SECOND CONNECTOR
- 8: SENSOR
- 9: ACOUSTIC SECTION
- U1: COMMUNICATION DEVICE
- X1: PROTRUSION PORTION

## Claims

1. A fire alarm (1) comprising:
a wireless communication terminal (A1) configured to perform wireless communication at a first frequency and a second frequency which are different from each other,
a sensor (8) configured to sense a fire; and
an acoustic section (9) configured to produce an alarm sound in accordance with sensing of the fire,
the wireless communication terminal (A1) comprising:
a first antenna element (2A);
a second antenna element (2B); and
a wireless circuit (3) configured to perform at least one of transmission or reception of a radio signal via the first antenna element (2A) and the second antenna element (2B),
the wireless communication terminal being configured such that when the wireless communication terminal performs the wireless communication at the first frequency, the first antenna element (2A) is in an electric power receiving state and the second antenna element (2B) is in a grounded state,
the wireless communication terminal being configured such that when the wireless communication terminal performs the wireless communication at the second frequency, the second antenna element (2B) is in an electric power receiving state and the first antenna element (2A) is in an opened or grounded state,
the fire alarm (1) being configured to, when the sensor (8) senses the fire, transmit a cooperation signal to another fire alarm (1) at the first frequency, the cooperation signal being a signal for causing the another fire alarm to produce the alarm sound in a cooperative manner,
the fire alarm (1) being configured to, when the sensor (8) senses the fire, transmit a notification signal to a communication device (U1) at the second frequency, the notification signal being a signal for externally giving a notification of the fire.

2. The fire alarm (1) of claim 1, wherein
each of the first antenna element (2A) and the second antenna element (2B) constitutes a linear antenna.

3. The fire alarm (1) of claim 1 or 2, wherein
the first frequency is lower than the second frequency.

4. The fire alarm (1) of any one of claims 1 to 3, wherein the wireless communication terminal (A1) further comprises a switching unit (4) configured to switch between the electric power receiving state of the second antenna element (2B) and the grounded state of the second antenna element (2B).

5. The fire alarm (1) of any one of claims 1 to 3, wherein the wireless communication terminal (A1) further comprises a matching circuit (6B) electrically inserted between the wireless circuit (3) and the second antenna element (2B) and configured to match a first impedance of a side of the wireless circuit (3) and a second impedance of a side of the second antenna element (2B) to each other, wherein
the matching circuit (6B) is configured such that the second impedance becomes lower than the first impedance when the wireless communication is performed at the first frequency, and
the matching circuit (6B) is configured such that the second impedance is matched to the first impedance when the wireless communication is performed at the second frequency.

6. The fire alarm (1) of any one of claims 1 to 3, wherein the wireless communication terminal (A1) further comprises a switching unit (5) configured to switch between the electric power receiving state of the first antenna element (2A) and the grounded state of the first antenna element (2A).

7. The fire alarm (1) of any one of claims 1 to 3, wherein the wireless communication terminal (A1) further comprises a matching circuit (6A) electrically inserted between the wireless circuit (3) and the first antenna element (2A) and is configured to match a first impedance of a side of the wireless circuit (3) and a second impedance of a side of the first antenna element (2A) to each other, wherein
the matching circuit (6A) is configured such that
the second impedance is matched to the first impedance when the wireless communication terminal performs the wireless communication at the first frequency and
the second impedance becomes higher than or lower than the first impedance when the wireless communication terminal performs the wireless communication at the second frequency.

8. The fire alarm (1) of any one of claims 1 to 7, wherein
the length of the second antenna element (2B) is defined such that the second antenna element (2B) is determined to satisfy the condition formula: λ₂/4 < L < λ₁/4, where L denotes the length of the second antenna element (2B), λ₁ denotes a wavelength of the first frequency, and λ₂ denotes a wavelength of the second frequency.

9. The fire alarm (1) of any one of claims 1 to 8, the wireless communication terminal (A1) further comprises a circuit board (7) including a first connector (71) to which one end of the first antenna element (2A) is connected and a second connector (72) to which one end of the second antenna element (2B) is connected, wherein
the first connector (71) is disposed in a vicinity of the second connector (72).

10. The fire alarm (1) of any one of claims 1 to 9, the wireless communication terminal (A1) further comprises a circuit board (7) connected to one end of each of the first antenna element (2A) and the second antenna element (2B), wherein
at least one of the first antenna element (2A) or the second antenna element (2B) has a protrusion portion (X1),
the protrusion portion (X1) has an open end (20) located on an opposite side from the one end, and when viewed along a thickness direction of the circuit board (7), the protrusion portion (X1) is disposed to outwardly protrude beyond an edge (70) of the circuit board (7), and
the protrusion portion (X1) occupies a region corresponding to a half or more of an entire length of the at least one of the first antenna element (2A) or the second antenna element (2B) when viewed along the thickness direction of the circuit board (7).

11. A management system (100), comprising:
the fire alarm (1) according to any one of claim 1 to 10;
one or a plurality of the another fire alarms (1); and
a control apparatus (103) serving as the communication device (U1) and being configured to manage one or a plurality of electric loads (104).

## Patentansprüche

1. Brandmelder (1), aufweisend:
ein drahtloses Kommunikationsendgerät (A1), das konfiguriert ist, um eine drahtlose Kommunikation auf einer ersten Frequenz und einer zweiten Frequenz, die sich voneinander unterscheiden, durchzuführen,
einen Sensor (8), der konfiguriert ist, um einen Brand zu erfassen; und
einen akustischen Abschnitt (9), der konfiguriert ist, um einen Alarmton in Übereinstimmung mit dem Erfassen des Brands zu erzeugen,
wobei das drahtlose Kommunikationsendgerät (A1) aufweist:
ein erstes Antennenelement (2A);
ein zweites Antennenelement (2B); und
eine drahtlose Schaltung (3), die konfiguriert ist, um mindesten eines von einem Senden oder einem Empfangen eines Funksignals über das erste Antennenelement (2A) oder über das zweite Antennenelement (2B) durchzuführen,
wobei das drahtlose Kommunikationsendgerät so konfiguriert ist, dass, wenn das drahtlose Kommunikationsendgerät die drahtlose Kommunikation auf der ersten Frequenz durchführt, das erste Antennenelement (2A) sich in einem Zustand des Empfangs elektrischer Energie befindet und das zweite Antennenelement (2B) sich in einem geerdeten Zustand befindet,
das drahtlose Kommunikationsendgerät so konfiguriert ist, dass, wenn das drahtlose Kommunikationsendgerät die drahtlose Kommunikation auf der zweiten Frequenz durchführt, das zweite Antennenelement (2B) sich in einem Zustand des Empfangs elektrischer Energie befindet und das erste Antennenelement (2A) sich in einem Leerlauf- oder geerdeten Zustand befindet,
der Brandmelder (1) so konfiguriert ist, dass er, wenn der Sensor (8) den Brand erfasst, ein Kooperationssignal auf der ersten Frequenz an einen anderen Brandmelder (1) sendet, wobei das Kooperationssignal ein Signal ist, das den anderen Brandmelder veranlasst, in kooperativer Weise den Alarmton zu erzeugen,
der Brandmelder (1) so konfiguriert ist, dass er, wenn der Sensor (8) den Brand erfasst, ein Benachrichtigungssignal auf der zweiten Frequenz an eine Kommunikationsvorrichtung (U1) sendet, wobei das Benachrichtigungssignal ein Signal zur Ausgabe eine Meldung über den Brand nach außen ist.

2. Brandmelder (1) nach Anspruch 1, wobei
sowohl das erste Antennenelement (2A) als auch das zweite Antennenelement (2B) eine lineare Antenne bilden.

3. Brandmelder (1) nach Anspruch 1 oder 2, wobei
die erste Frequenz niedriger ist als die zweite Frequenz.

4. Brandmelder (1) nach einem der Ansprüche 1 bis 3, wobei das drahtlose Kommunikationsendgerät (A1) ferner eine Schalteinheit (4) aufweist, die konfiguriert ist, um zwischen dem Zustand des Empfangs elektrischer Energie des zweiten Antennenelements (2B) und dem geerdeten Zustand des zweiten Antennenelements (2B) umzuschalten.

5. Brandmelder (1) nach einem der Ansprüche 1 bis 3, wobei das drahtlose Kommunikationsendgerät (A1) ferner eine Anpassungsschaltung (6B) aufweist, die elektrisch zwischen der drahtlosen Schaltung (3) und dem zweiten Antennenelement (2B) eingefügt ist und konfiguriert ist, um eine erste Impedanz einer Seite der drahtlosen Schaltung (3) und eine zweite Impedanz einer Seite des zweiten Antennenelements (2B) aneinander anzupassen, wobei
die Anpassungsschaltung (6B) so konfiguriert ist, dass die zweite Impedanz niedriger wird als die erste Impedanz, wenn die drahtlose Kommunikation auf der ersten Frequenz durchgeführt wird, und
die Anpassungsschaltung (6B) so konfiguriert ist, dass die zweite Impedanz an die erste Impedanz angepasst wird, wenn die drahtlose Kommunikation auf der zweiten Frequenz durchgeführt wird.

6. Brandmelder (1) nach einem der Ansprüche 1 bis 3, wobei das drahtlose Kommunikationsendgerät (A1) ferner eine Schalteinheit (5) aufweist, die konfiguriert ist, um zwischen dem Zustand des Empfangs elektrischer Energie des ersten Antennenelements (2A) und dem geerdeten Zustand des ersten Antennenelements (2A) umzuschalten.

7. Brandmelder (1) nach einem der Ansprüche 1 bis 3, wobei das drahtlose Kommunikationsendgerät (A1) ferner eine Anpassungsschaltung (6A) aufweist, die elektrisch zwischen der drahtlosen Schaltung (3) und dem ersten Antennenelement (2A) eingefügt ist und konfiguriert ist, um eine erste Impedanz einer Seite der drahtlosen Schaltung (3) und eine zweite Impedanz einer Seite des ersten Antennenelements (2A) aneinander anzupassen, wobei
die Anpassungsschaltung (6A) so konfiguriert ist, dass
die zweite Impedanz an die erste Impedanz angepasst ist, wenn das drahtlose Kommunikationsendgerät die drahtlose Kommunikation auf der ersten Frequenz durchführt, und
die zweite Impedanz höher oder niedriger als die erste Impedanz wird, wenn das drahtlose Kommunikationsendgerät die drahtlose Kommunikation auf der zweiten Frequenz durchführt.

8. Brandmelder (1) nach einem der Ansprüche 1 bis 7, wobei
die Länge des zweiten Antennenelements (2B) so definiert ist, dass das zweite Antennenelement (2B) so bestimmt ist, das es die Bedingungsformel λ₂/4 < L < λ₁/4 erfüllt, wobei L die Länge des zweiten Antennenelements (2B) bezeichnet, λ₁ eine Wellenlänge der ersten Frequenz bezeichnet und λ₂ eine Wellenlänge der zweiten Frequenz bezeichnet.

9. Brandmelder (1) nach einem der Ansprüche 1 bis 8, wobei das drahtlose Kommunikationsendgerät (A1) ferner eine Leiterplatte (7) mit einem ersten Verbinder (71), mit dem ein Ende des ersten Antennenelements (2A) verbunden ist, und einem zweiten Verbinder (72), mit dem ein Ende des zweiten Antennenelements (2B) verbunden ist, aufweist, wobei
der erste Verbinder (71) in der Nähe des zweiten Verbinders (72) angeordnet ist.

10. Brandmelder (1) nach einem der Ansprüche 1 bis 9, wobei das drahtlose Kommunikationsendgerät (A1) ferner eine Leiterplatte (7) aufweist, die mit einem Ende sowohl des ersten Antennenelements (2A) als auch des zweiten Antennenelements (2B) verbunden ist, wobei
mindestens eines von dem ersten Antennenelement (2A) oder von dem zweiten Antennenelement (2B) einen vorspringenden Abschnitt (X1) aufweist,
der vorspringende Abschnitt (X1) ein offenes Ende (20) aufweist, das sich von dem einen Ende aus auf einer gegenüberliegenden Seite befindet, und der vorspringende Abschnitt (X1) bei Betrachtung entlang einer Dickenrichtung der Leiterplatte (7) so angeordnet ist, dass er über eine Kante (70) der Leiterplatte (7) hinaus nach außen vorsteht, und
der vorspringende Abschnitt (X1) einen Bereich einnimmt, der in Betrachtung entlang der Dickenrichtung der Leiterplatte (7) einer Hälfte oder mehr einer Gesamtlänge mindestens des ersten Antennenelements (2A) oder des zweiten Antennenelements (2B) entspricht.

11. Verwaltungssystem (100), aufweisend:
den Brandmelder (1) nach einem der Ansprüche 1 bis 10;
einen oder mehrere andere Brandmelder (1); und
eine Steuervorrichtung (103), die als Kommunikationsvorrichtung (U1) dient und konfiguriert ist, um eine oder mehrere elektrische Lasten (104) zu steuern.

## Revendications

1. Alarme d'incendie (1) comprenant :
un terminal de communication sans fil (A1) configuré pour effectuer une communication sans fil à une première fréquence et une deuxième fréquence qui sont différentes l'une de l'autre,
un capteur (8) configuré pour détecter un incendie ; et
une section acoustique (9) configurée pour produire un son d'alarme en fonction de la détection de l'incendie,
le terminal de communication sans fil (A1) comprenant :
un premier élément d'antenne (2A) ;
un deuxième élément d'antenne (28) ; et
un circuit sans fil (3) configuré pour effectuer au moins l'une parmi une émission ou une réception d'un signal radio par l'intermédiaire du premier élément d'antenne (2A) et du deuxième élément d'antenne (28),
le terminal de communication sans fil étant configuré de sorte que, lorsque le terminal de communication sans fil effectue la communication sans fil à la première fréquence, le premier élément d'antenne (2A) est dans un état de réception d'énergie électrique et le deuxième élément d'antenne (2B) est dans un état mis à la terre,
le terminal de communication sans fil étant configuré de sorte que lorsque le terminal de communication sans fil effectue la communication sans fil à la deuxième fréquence, le deuxième élément d'antenne (2B) est dans un état de réception d'énergie électrique et le premier élément d'antenne (2A) est dans un état ouvert ou mis à la terre,
l'alarme d'incendie (1) étant configurée pour, lorsque le capteur (8) détecte l'incendie, transmettre un signal de coopération à une autre alarme d'incendie (1) à la première fréquence, le signal de coopération étant un signal pour amener l'autre alarme d'incendie à produire le son d'alarme de manière coopérative,
l'alarme d'incendie (1) étant configurée pour, lorsque le capteur (8) détecte l'incendie, transmettre un signal de notification à un dispositif de communication (U1) à la deuxième fréquence, le signal de notification étant un signal pour donner une notification externe de l'incendie.

2. Alarme d'incendie (1) selon la revendication 1, dans laquelle chacun du premier élément d'antenne (2A) et du deuxième élément d'antenne (2B) constitue une antenne linéaire.

3. Alarme d'incendie (1) selon la revendication 1 ou 2, dans laquelle la première fréquence est inférieure à la deuxième fréquence.

4. Alarme d'incendie (1) selon l'une quelconque des revendications 1 à 3, dans laquelle le terminal de communication sans fil (A1) comprend en outre une unité de commutation (4) configurée pour commuter entre l'état de réception d'énergie électrique du deuxième élément d'antenne (28) et l'état mis à la terre du deuxième élément d'antenne (2B).

5. Alarme d'incendie (1) selon l'une quelconque des revendications 1 à 3, dans laquelle le terminal de communication sans fil (A1) comprend en outre un circuit d'adaptation (68) électriquement inséré entre le circuit sans fil (3) et le deuxième élément d'antenne (2B) et configuré pour adapter une première impédance d'un côté du circuit sans fil (3) et une deuxième impédance d'un côté du deuxième élément d'antenne (2B) l'une à l'autre, dans laquelle
le circuit d'adaptation (6B) est configuré de sorte que la deuxième impédance devient plus faible que la première impédance lorsque la communication sans fil est effectuée à la première fréquence, et
le circuit d'adaptation (6B) est configuré de sorte que la deuxième impédance est adaptée à la première impédance lorsque la communication sans fil est effectuée à la deuxième fréquence.

6. Alarme d'incendie (1) selon l'une quelconque des revendications 1 à 3, dans laquelle le terminal de communication sans fil (A1) comprend en outre une unité de commutation (5) configurée pour commuter entre l'état de réception d'énergie électrique du premier élément d'antenne (2A) et l'état mis à la terre du premier élément d'antenne (2A).

7. Alarme d'incendie (1) selon l'une quelconque des revendications 1 à 3, dans laquelle le terminal de communication sans fil (A1) comprend en outre un circuit d'adaptation (6A) électriquement inséré entre le circuit sans fil (3) et le premier élément d'antenne (2A) et est configuré pour adapter une première impédance d'un côté du circuit sans fil (3) et une deuxième impédance d'un côté du premier élément d'antenne (2A) l'une à l'autre, dans laquelle
le circuit d'adaptation (6A) est configuré de sorte que
la deuxième impédance est adaptée à la première impédance lorsque le terminal de communication sans fil effectue la communication sans fil à la première fréquence et
la deuxième impédance devient supérieure ou inférieure à la première impédance lorsque le terminal de communication sans fil effectue la communication sans fil à la deuxième fréquence.

8. Alarme d'incendie (1) selon l'une quelconque des revendications 1 à 7, dans laquelle
la longueur du deuxième élément d'antenne (2B) est définie de sorte que le deuxième élément d'antenne (2B) est déterminé pour satisfaire à la formule conditionnelle : λ₂/4 < L < λ₁/4, où L désigne la longueur du deuxième élément d'antenne (28), λ₁ désigne une longueur d'onde de la première fréquence, et λ₂ désigne une longueur d'onde de la deuxième fréquence.

9. Alarme d'incendie (1) selon l'une quelconque des revendications 1 à 8, le terminal de communication sans fil (A1) comprend en outre une carte de circuit (7) comprenant un premier connecteur (71) auquel une extrémité du premier élément d'antenne (2A) est connectée et un deuxième connecteur (72) auquel une extrémité du deuxième élément d'antenne (2B) est connectée, dans laquelle
le premier connecteur (71) est disposé à proximité du deuxième connecteur (72).

10. Alarme d'incendie (1) selon l'une quelconque des revendications 1 à 9, le terminal de communication sans fil (A1) comprenant en outre une carte de circuit (7) connectée à une extrémité de chacun du premier élément d'antenne (2A) et du deuxième élément d'antenne (28), dans laquelle
au moins l'un du premier élément d'antenne (2A) ou du deuxième élément d'antenne (2B) comporte une partie saillante (X1),
la partie saillante (XI) a une extrémité ouverte (20) située sur un côté opposé à ladite extrémité, et lorsqu'elle est observée le long d'une direction d'épaisseur de la carte de circuit (7), la partie saillante (X1) est disposée de façon à faire saillie vers l'extérieur au-delà d'un bord (70) de la carte de circuit (7), et
la partie saillante (X1) occupe une région correspondant à une moitié ou plus d'une longueur entière de l'au moins un du premier élément d'antenne (2A) ou du deuxième élément d'antenne (2B) lorsqu'elle est observée le long de la direction d'épaisseur de la carte de circuit (7).

11. Système de gestion (100), comprenant :
l'alarme d'incendie (1) selon l'une quelconque des revendications 1 à 10 ;
une ou une pluralité des autres alarmes d'incendie (1) ; et
un appareil de commande (103) servant de dispositif de communication (U1) et étant configuré pour gérer une ou une pluralité de charges électriques (104).
